## Europäisches Patentamt
## European Patent Office
## Office européen des brevets

(11) Veröffentlichungsnummer: **0 128 344**
**A1**

(12) **EUROPÄISCHE PATENTANMELDUNG**

(21) Anmeldenummer: **84105110.5**

(22) Anmeldetag: **07.05.84**

(51) Int. Cl.³: **H 02 H 9/06**

(30) Priorität: **16.05.83 DE 3317758**

(43) Veröffentlichungstag der Anmeldung: **19.12.84**
**Patentblatt 84/51**

(84) Benannte Vertragsstaaten: **AT BE CH DE FR GB LI SE**

(71) Anmelder: **TRANSFORMATOREN UNION**
**AKTIENGESELLSCHAFT, Deckerstrasse 1,**
**D-7000 Stuttgart 50 (DE)**

(72) Erfinder: **Müller, Walter, Dr., Dipl.-Ing.,**
**Kappelbergsteig 37, D-8540 Schwabach (DE)**

(74) Vertreter: **Mehl, Ernst, Dipl.-Ing. et al, Postfach 22 01 76,**
**D-8000 München 22 (DE)**

(54) **Anordnung von Überspannungsableitern an einem Transformator.**

㉟ Zum Schutz von Dreiphasensystemen ist üblicherweise an alle spannungführenden Leiter (1, 2, 3) ein Phasen-Überspannungsableiter (6) angeschlossen, deren zweite Klemmen in einem Knotenpunkt (7) zusammengeschaltet sind und über einen weiteren Überspannungsableiter (8) an Erdpotential liegen, wobei die Phasen-Überspannungsableiter (6) ungleich von dem weiteren Überspannungsableiter (8) ausgeführt sind. Erfindungsgemäß sind mit den Leitern (1, 2, 3) des Dreiphasensystems verbundene Transformatorwicklungen (4) ebenfalls in einem Sternpunkt (Mp) zusammengeschaltet und ist dieser Sternpunkt (Mp) direkt mit dem Knotenpunkt (7) der Phasen Überspannungsableiter (6) durch einen besonderen Leiter (9) galvanisch verbunden. Die Anwendung der erfindungsgemäßen Anordnung ist besonders vorteilhaft bei Maschinentransformatoren und Netzkuppeltransformatoren zur Begrenzung der Beeinflussung von Niederspannungs- und Nachrichtennetzen beim Auftreten von einpoligen Erdkurzschlußströmen.

TRANSFORMATOREN UNION AG     Unser Zeichen
Stuttgart                VPA 83 P 6 5 0 6 E

Anordnung von Überspannungsableitern an einem
Transformator

Die Erfindung betrifft eine Anordnung von Überspannungsableitern an einem Transformator zum Schutz eines
Dreiphasensystems, bei dem an alle spannungführenden
Leiter je ein Phasen-Überspannungsableiter angeschlossen
ist, deren zweite Klemmen in einem Knotenpunkt zusammengeschaltet sind und über einen weiteren Überspannungsableiter an Erdpotential liegen, wobei die Phasen-Überspannungsableiter ungleich von dem weiteren Überspannungsableiter ausgeführt sind.

Drehstromtransformatoren und Einphasentransformator-
Bänke in wirksam geerdeten Hochspannungsnetzen werden
nur zum Teil mit starr geerdeten Sternpunkten betrieben. Um die Beeinflussung von Niederspannungs- und Nachrichtennetzen durch einpolige Erdkurzschlußströme klein
zu halten, werden nur in Ausnahmefällen die Sternpunkte
von Maschinentransformatoren und nur etwa 70 % der
Sternpunkte von Netzkuppeltransformatoren starr geerdet.

Dies hat für den Überspannungsschutz der betroffenen
Transformatoren zur Folge, daß die Lösch- und Ansprechwechsel-Spannung der eingesetzten Überspannungsableiter
so hoch gewählt werden muß, daß bei der Kombination von
Lastabwurf und einpoligem Erdschluß die Überspannungsableiter an den gesunden Phasen nicht zerstört werden.

Dies hat ferner zur Folge, daß die Schaltstoßansprechpegel so hoch liegen, daß keine ausreichende Pegelsicherheit zur Stehschaltstoßspannung des Transformators mehr vorhanden ist. Ganz besonders gilt dies auch für die innere und äußere Phase-Phase-Schaltstoßbeanspruchung, bei der mit der Summenansprechspannung zweier Phasenableiter gerechnet werden muß. Ferner kann beim Abschalten mit Stromabrissen längs des betroffenen Phasenstrangs eine Schaltspannungsbeanspruchung auftreten, die der Summe der Ansprechspannungen von Phasen- und Sternpunktableiter entspricht.

Auch hinsichtlich Blitzstoß ist keine ausreichende Pegelsicherheit vorhanden, weil bei subtraktivem Stoß, d.h., wenn z.B. eine Blitzstoßspannung negativer Polarität im positiven Scheitelwert der Leiter-Erdspannung eintrifft, die Längsbeanspruchung an der Wicklung, die dann der Summe aus dem Scheitelwert der Leiter-Erdspannung und dem Ableiter-Ansprechwert entspricht, ebenfalls die Stehblitzstoßspannung der Isolation erreichen kann.

Bei großen Maschinentransformatoren wurden in einzelnen Fällen Sternpunkt-Schnellerder eingebaut, deren Auslösung mit dem davorliegenden Transformator-Schalter gekoppelt ist. Durch deren kürzere Eigenzeit wird erreicht, daß beim Abschalten des Transformators bzw. Transformator-Generator-Blocks unmittelbar vor dem Abschalten der Sternpunkt geerdet wird. Wird aber der Block im Richtbetrieb über eine Stichleitung gefahren, bleibt bei einem entfernten Lastabwurf der Schnellerder unwirksam.

Eine andere praktizierte Lösung ist, die Ableiter ohne Rücksicht auf ihre gelegentliche Zerstörung durch betriebsfrequente Überspannungen so zu dimensionieren, daß sie einen wirksamen Schutz gegen Schaltstoß- und Blitzstoß-Beanspruchungen darstellen.

Die erste Lösung ist hinsichtlich subtraktivem Blitzstoß unwirksam und stellt auch gegen Schaltspannungen
keinen lückenlosen Schutz dar. Die zweite Lösung bedingt
gelegentliche Betriebsunterbrechungen.

Durch die DE-OS 21 44 712 ist auch schon zum kombinierten Überspannungsschutz zwischen den Phasen und gegen
Erde eine Überspannungsableiteranordnung bekannt, bei
welcher an alle spannungsführenden Leiter Teilableiter
angeschlossen sind, deren zweite Klemmen in einem
Knotenpunkt zusammengeschaltet und über einen oder
mehrere Teilableiter an Erde gelegt sind, wobei die
Charakteristiken der eingesetzten Teilableiter unterschiedlich sind. Bei dieser Anordnung ist jedoch bei
Verwendung an Transformatoren unter ungünstigen Voraussetzungen keine ausreichende Sicherheit für die Isolierung längs der Wicklungen vorhanden.

Der Erfindung liegt daher die Aufgabe zugrunde, die Anordnung der zum Schutz von Transformatorwicklungen vorgesehenen Überspannungsableiter weiter zu verbessern,
ohne dabei den erforderlichen Aufwand wesentlich zu erhöhen und dabei eine Verstärkung der Beeinflussung von
Niederspannungs- und Nachrichtennetzen zu vermeiden.

Erfindungsgemäß wird diese Aufgabe bei einer Anordnung
der eingangs genannten Art dadurch gelöst, daß mit den
Leitern des Dreiphasensystems verbundene Transformatorwicklungen ebenfalls im Stern zusammengeschaltet sind
und daß dieser Sternpunkt direkt mit dem Knotenpunkt der
Phasen-Überspannungsableiter galvanisch verbunden ist.

Nach zweckmäßigen Weiterbildungen der Erfindung ist vorgesehen, daß elektrisch parallel zu dem Überspannungsableiter zwischen dem Knotenpunkt und dem Erdpotential ein

0128344

- 4 -    VPA 83 P 6506 E

Stoßkondensator vorgesehen ist und daß die Löschspannung jedes der Phasen-Überspannungsableiter gegenüber der Löschspannung des weiteren Überspannungsableiters etwa im Verhältnis 0,72 zu 1 ausgelegt ist.

Der Einsatz der erfindungsgemäßen Anordnung ist sehr vorteilhaft wirksam gegenüber vom Netz einlaufenden Blitzstoßspannungen, wie anhand zweier charakteristischer Betriebsfälle im folgenden erläutert ist.

Bei einem symmetrischen Dreiphasenbetrieb befindet sich der Sternpunkt auf Erdpotential und ist über die Summe der Eingangskapazitäten des Transformator-Mittelpunktanschlusses und des weiteren Überspannungsableiters kapazitiv an Erde gekoppelt. Bei Wicklungsbauarten mit kleiner sternpunktseitiger Eingangskapazität ist darüber hinaus der parallel zu dem weiteren Überspannungsableiter vorgesehene Stoßkondensator sehr vorteilhaft. Infolge der erfindungsgemäßen Anordnung sprechen die Phasen-Überspannungsableiter so an, als ob ihr Ende starr geerdet wäre.

Vom Moment des Ansprechens der Phasen-Überspannungsableiter an erfolgt eine Aufladung der erwähnten Summenkapazität durch den Stoßstrom. Durch geeignete Bemessung dieser Kapazitäten ist erreicht, daß die Anstiegssteilheit der Spannung am Phaseneingang nach dem Ansprechen gegenüber der Steilheit vor dem Ansprechen ganz erheblich reduziert ist. Dadurch ist gewährleistet, daß der Längsgradient in der Wicklung durch den langsamen Spannungsanstieg, der im übrigen gleichzeitig an Wicklungseingang und Sternpunkt erfolgt, nicht mehr erhöht wird. Die Beanspruchung der inneren Isolation ist somit bei dem kritischen subtraktiven Stoß durch die Summe aus Leiter-Erd-Spannung und dem Ansprechwert der Phasen-Überspannungsableiter bzw. dem daraus resultierenden Längsspannungs-Gradienten gegeben. Die Beanspruchung der äußeren Isolation ist demzufolge durch die Summe der Restspannungen an den Phasen-Überspannungsableitern und dem weiteren Überspannungsableiter bestimmt.

Der zweite charakteristische Betriebsfall bei der erfindungsgemäßen Anordnung besteht in einem Blitzstoß auf eine intakte Phase beim einpoligen Erdschluß. Im hierbei kritischen Fall des subtraktiven Blitzspannungsstoßes vermindert sich die Ansprechspannung des Phasen-Überspannungsableiters um den Augenblickswert des gegensinnig gepolten Sternpunktpotentials. Auch hierbei ist die Beanspruchung der äußeren Isolation wieder durch die Summe der Restspannungen an den Phasen-Überspannungsableitern und dem weiteren Überspannungsableiter bestimmt.

Ein Ausführungsbeispiel der erfindungsgemäßen Anordnung von Überspannungsableitern an einem Transformator ist anhand einer Zeichnung näher erläutert.

Klemmen U,V und W von Oberspannungswicklungen 4 in einem Transformator sind mit Hochspannungsleitern 1, 2 und 3 eines Elektrizitätsversorgungsnetzes verbunden. Die anderen Klemmen der Oberspannungswicklungen 4 sind in einem Sternpunkt Mp zusammengeschaltet.

Zugehörige Unterspannungswicklungen 5 des nicht näher dargestellten Transformators sind elektrisch im Dreieck zusammengeschaltet.

Jeder der Hochspannungsleiter 1, 2 und 3 liegt an seinem mit den Klemmen U,V und W verbundenen Enden an einem oberspannungsseitigen Eingang je eines Phasen-Überspannungsableiters 6. Die unterspannungsseitigen Ausgänge der Phasen-Überspannungsableiter 6 sind an einem von

0128344

einer Leiterschiene dargestellten Knotenpunkt 7 zusammengeschaltet. Der Knotenpunkt 7 seinerseits ist in bekannter Weise über einen weiteren Überspannungsableiter 8 geerdet.

Zur Verbesserung der Wirksamkeit des Schutzes der Anlalage gegen Überspannungen ist erfindungsgemäß die den Knotenpunkt 7 darstellende Leiterschiene über einen besonderen Leiter 9 mit dem Sternpunkt Mp der Oberspannungswicklungen 4 galvanisch verbunden.

Bei Anwendungsfällen mit kleinen Eingangskapazitäten an den sternpunktseitigen Eingängen der Oberspannungswicklungen 4 ist elektrisch parallel zu dem Überspannungsableiter 8 ein Stoßkondensator 10 vorgesehen.

1 Figur
3 Patentansprüche

0128344

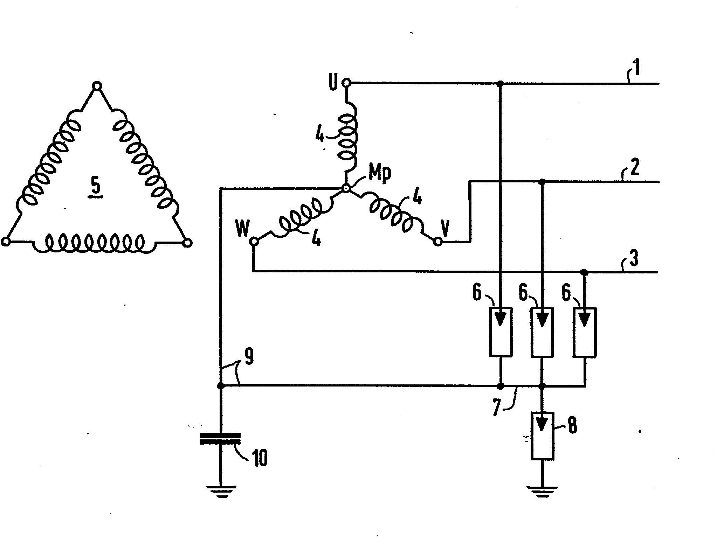

Patentansprüche

1. Anordnung von Überspannungsableitern an einem Transformator zum Schutz eines Dreiphasensystems, bei dem an alle spannungführenden Leiter (1, 2, 3) je ein Phasen-Überspannungsableiter (6) angeschlossen ist, deren zweite Klemmen in einem Knotenpunkt (7) zusammengeschaltet sind und über einen weiteren Überspannungsableiter (8) an Erdpotential liegen, wobei die Phasen-Überspannungsableiter (6) ungleich von dem weiteren Überspannungsableiter (8) ausgeführt sind, d a d u r c h   g e k e n n - z e i c h n e t , daß mit den Leitern (1, 2 und 3) des Dreiphasensystems verbundene Transformatorwicklunmgen (4) ebenfalls in einem Sternpunkt (Mp) zusammengeschaltet sind und daß dieser Sternpunkt (Mp) direkt mit dem Knotenpunkt (7) der Phasen-Überspannungsableiter (6) durch einen besonderen Leiter (9) galvanisch verbunden ist.

2. Anordnung nach Anspruch 1, d a d u r c h   g e - k e n n z e i c h n e t , daß elektrisch parallel zu dem Überspannungsableiter (8) zwischen dem Knotenpunkt (7) und dem Erdpotential ein Stoßkondensator (10) vorgesehen ist.

3. Anordnung nach Anspruch 1 und 2, d a d u r c h   g e k e n n z e i c h n e t , daß die Löschspannung jedes der Phasen-Überspannungsableiter (6) gegenüber der Löschspannung des weiteren Überspannungsableiters (8) etwa im Verhältnis 0,72 : 1 ausgelegt ist.

0128344

83 P 6506

# EUROPÄISCHER RECHERCHENBERICHT

**Europäisches Patentamt**

0128344

Nummer der Anmeldung

EP 84 10 5110

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-C- 364 895 (ALLGEMEINE ELEKTRICITÄTS-GESELLSCHAFT) * Ganzes Dokument * | 1 | H 02 H 9/06 |
| Y | DE-B-1 194 041 (SIEMENS SCHUCKERTWERKE) * Ganzes Dokument * | 1 | |
| A | | 2,3 | |
| D,A | DE-B-2 144 712 (TRANSFORMATOREN UNION) * Figur * | | |

RECHERCHIERTE SACHGEBIETE (Int. Cl. ³)

H 02 H 1/00
H 02 H 7/04
H 02 H 9/06

Der vorliegende Recherchenbericht wurde für alle Patentansprüche erstellt.

| Recherchenort | Abschlußdatum der Recherche | Prüfer |
|---|---|---|
| BERLIN | 01-08-1984 | LEMMERICH J |